# EUROPÄISCHE PATENTSCHRIFT

(11) **EP 3 111 097 B1**
(45) Veröffentlichungstag und Bekanntmachung des Hinweises auf die Patenterteilung: **06.11.2019**
(21) Anmeldenummer: 15704292.0
(22) Anmeldetag: 10.02.2015
(51) Int. Cl.: F16B 19/10

(54) **DORNBRUCHBLINDNIETE**
BREAK-STEM BLIND RIVET
RIVET AVEUGLE CASSABLE À MANDRIN

(30) Priorität: 28.02.2014 DE 102014203635
(43) Veröffentlichungstag der Anmeldung: 04.01.2017
(73) Patentinhaber: Bayerische Motoren Werke Aktiengesellschaft, 80809 München (DE)
(72) Erfinder: HERZOG, Benno, 85368 Volkmannsdorferau (DE); MANG, Martin, 86459 Margertshausen (DE)
(86) Internationale Anmeldenummer: PCT/EP2015/052730
(87) Internationale Veröffentlichungsnummer: WO 2015/128185

(56) Entgegenhaltungen:
- DE-A1- 2 949 109
- FR-A- 1 331 622
- US-A- 3 460 429
- US-A1- 2009 035 089

## Beschreibung

Die Erfindung betrifft einen Dornbruchblindniet, aufweisend einen Blindnietdorn und eine Blindniethülse, wobei der Blindnietdorn einen länglichen Schaft, einen Kopf an einem Ende des Schaftes sowie eine Sollbruchstelle aufweist, und wobei die Blindniethülse einen Hülsenschaft und einen Hülsenkopf, die zur Aufnahme des Blindnietdorns ausgebildet sind, aufweist. Ferner betrifft die Erfindung einen Dornbruchblindniet, aufweisend einen Blindnietdorn und eine Blindniethülse, wobei der Blindnietdorn einen länglichen Schaft, einen Kopf an einem Ende des Schaftes, eine Sollbruchstelle sowie eine Haltekerbe aufweist, und wobei die Blindniethülse einen Hülsenschaft und einen Hülsenkopf, die zur Aufnahme des Blindnietdorns ausgebildet sind, aufweist.

Derartige Dornbruchblindniete sind bekannt. Insbesondere sind Dornbruchblindniete bekannt, die eine Haltekerbe aufweisen, um vor der Montage der Dornbruchblindniete in eine Öffnung wenigstens eines Werkstücks die Blindniethülse an dem Blindnietdorn zu fixieren, damit diese nicht von dem Blindnietdorn getrennt wird.

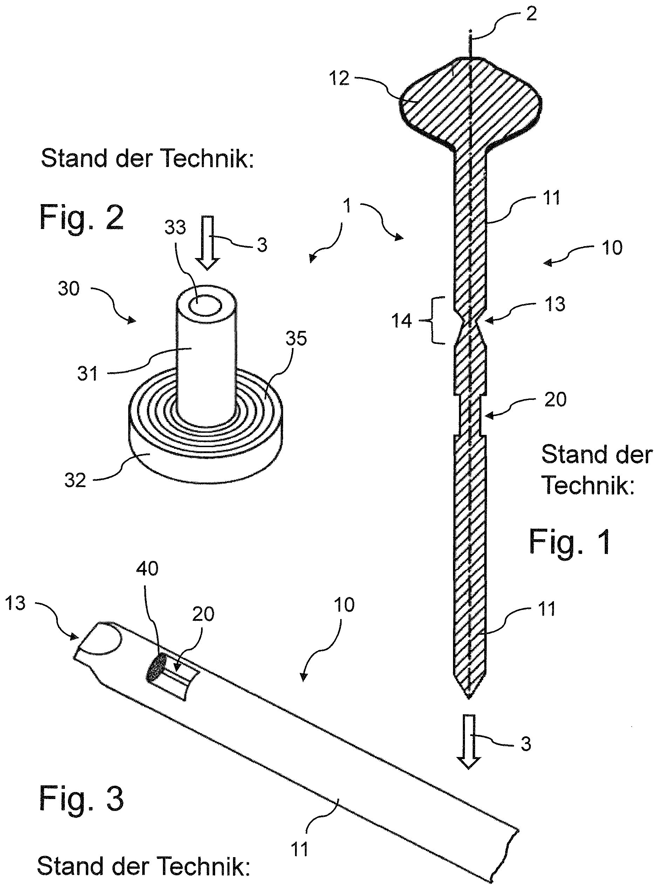

Beim Setzen von Dornbruchblindnieten mit Aluminiumhülse kommt es durch die am Nietdorn befindliche Haltekerbe zur erheblichen Spanbildung, die im Nietprozess zur starken Verschmutzung des Nietgerätes, insbesondere der Nietpistole, führt, was den Reinigungszyklus des Nietgerätes verkürzt und zu erhöhtem Bedarf an Ersatzteilen führt. In Fig. 3 ist ein abgerissener Teil eines Blindnietdorns 10 dargestellt. In der Haltekerbe 20 ist eine Spannablagerung 40 erkennbar. Diese Spannablagerung 40 verschmutzt die Nietgeräte.

Die Haltekerbe, wie auch die Spitze des Blindnietdorns, fungieren während des Herstellprozesses bzw. während des Setzvorgangs aufgrund ihrer scharfen Kanten wie Räumnadeln, wodurch Späne an der Innenseite der Aluminiumniethülse abgelöst werden. Die Haltekerbe und die damit verbundene Aufdickung des Blindnietdorns quer zur Haltekerbe führen zusätzlich zum Abrieb der Zinkbeschichtung am Blindnietdorn.

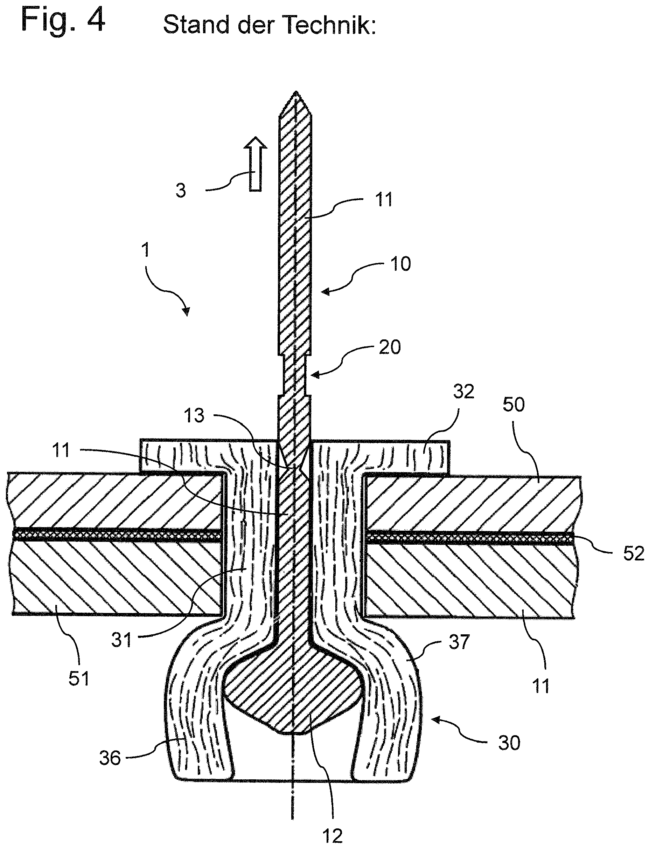

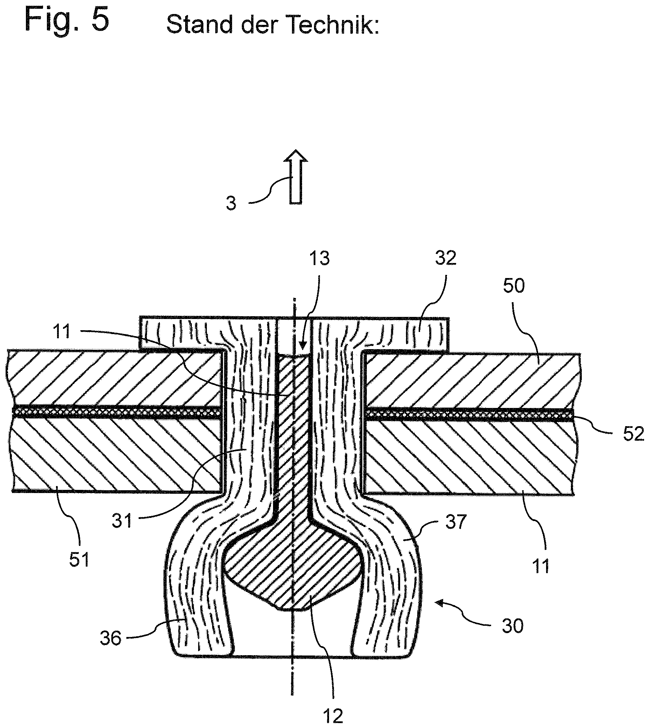

Aus der DE 10 2012 015 183 A1 ist ein Dornbruchblindniet bekannt. Der aus der DE 10 2012 015 183 A1 bekannte Dornbruchblindniet kann zusätzlich eine Haltekerbe aufweisen. Ein derartiger Dornbruchblindniet 1 ist in den Fig. 1 und 2 dargestellt. Der Dornbruchblindniet 1 weist einen Blindnietdorn 10, siehe Fig. 1, sowie eine Blindniethülse 30, siehe Fig. 2, auf. Der Blindnietdorn 10 weist einen länglichen Schaft 11, einen Kopf 12, eine Sollbruchstelle 13 sowie eine Haltekerbe 20 auf. Der Blindnietdorn 10 wird in die in Figur 2 dargestellte Blindniethülse 30 zur Herstellung einer Blindnietverbindung eingeführt. Mit Bezugszeichen 3 ist die Einführrichtung des Blindnietdorns 10 in die Blindniethülse 30 dargestellt. Der Setzvorgang des Dornbruchblindniets 1 durch zwei Werkstücke 50, 51 ist in den Fig. 4 und 5 dargestellt. Zunächst wird die Blindniethülse 30 durch die Öffnungen der Werkstücke 50, 51 eingesteckt, bis der Hülsenkopf 32 an eines der Werkstücke anschlägt. Anschließend wird der Blindnietdorn 10 in Einführrichtung 3 durch die Blindniethülse 30 gezogen. Dabei dehnt der Kopf 12 des Blindnietdorns 10 den Hülsenschaft 31 zur Ausbildung eines Schließkopfes 37 auseinander. Zum Schluss des Nietvorgangs reißt ein Teil des Schaftes 11 des Blindnietdorns 10 an der Sollbruchstelle 13 ab, siehe Fig. 5. zwischen den Werkstücken 50, 51 kann eine Zwischenschicht 52 angeordnet werden. Diese Zwischenschicht 52 ist aber nicht zwingend erforderlich.

Weitere derartige Dornbruchblindniete sind beispielsweise aus der DE 29 49 109 A1 sowie der US 2009/035089 A1 bekannt.

Es ist die Aufgabe der vorliegenden Erfindung, die voranstehend beschriebenen Nachteile beim Setzen von Dornbruchblindnieten in Öffnungen wenigstens eines Werkstücks zumindest teilweise zu beheben. Insbesondere ist es die Aufgabe der vorliegenden Erfindung, Dornbruchblindniete zur Verfügung zu stellen, welche eine Spanbildung deutlich reduzieren bzw. vollständig vermeiden können, so dass die Reinigungsintervalle der Nietgeräte verlängert werden können und der finanzielle Aufwand für die Beschaffung von Ersatzteilen für die Nietgeräte gering gehalten werden kann.

Die voranstehende Aufgabe wird gelöst durch einen erfindungsgemäßen Dornbruchblindniet mit den Merkmalen gemäß des Anspruchs 1 sowie durch einen erfindungsgemäßen Dornbruchblindniet mit den Merkmalen gemäß des Anspruchs 5. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Dornbruchblindniet gemäß Anspruch 1 beschrieben sind, soweit sinnvoll selbstverständlich auch im Zusammenhang mit dem erfindungsgemäßen Dornbruchblindniete gemäß Anspruch 6 und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe einen Dornbruchblindniet, aufweisend einen Blindnietdorn und eine Blindniethülse, gelöst. Der Blindnietdorn weist einen länglichen Schaft, einen Kopf an einem Ende des Schaftes sowie eine Sollbruchstelle auf. Die Blindniethülse weist einen Hülsenschaft und einen Hülsenkopf, die zur Aufnahme des Blindnietdorns ausgebildet sind, auf. Der Dornbruchblindniet ist dadurch gekennzeichnet, dass der Schaft des Blindnietdorns im Bereich der Sollbruchstelle eine radiale Ausdehnung aufweist, die größer ist als die radiale Ausdehnung des länglichen Schaftes außerhalb des Bereichs der Sollbruchstelle und die zur Ausbildung einer Verklemmung der Blindniethülse am Schaft im Bereich der Sollbruchstelle bei koaxialer Ausrichtung der Blindniethülse zu dem Schaft des Blindnietdorns größer ist als die radiale Ausdehnung der Bohrung der Blindniethülse.

Ein derartig ausgebildeter Dornbruchblindniet kann gänzlich auf eine Haltekerbe verzichten, da das Halten bzw. Verklemmung der Blindniethülse an dem Blindnietdorn durch die spezielle radiale Ausdehnung des Blindnietdorns im Bereich der Sollbruchstelle erfolgt. Die Blindniethülse wird einmal über den Blindnietdorn geschoben, bis diese an dem Kopf des Blindnietdorns anschlägt bzw. annähernd anschlägt. Hierbei wird die Blindniethülse über die Sollbruchstelle und damit die radiale Ausdehnung des Blindnietdorns im Bereich der Sollbruchstelle geschoben. Hierzu ist ein bestimmter Kraftaufwand erforderlich. Anschließend ist die Blindniethülse auf dem Blindnietdorn zwischen dessen Kopf und der Sollbruchstelle gehalten. Dadurch, dass die Blindniethülse nicht über eine Haltekerbe geschoben werden musste, kann die Spanbildung durch Abschaben von Material an der Innenwandlung der Blindniethülse gering gehalten bzw. gänzlich vermieden werden. Die einmal auf den Blindnietdorn aufgeschobene Blindniethülse kann nur unter Aufbringung einer erhöhten Kraft von dem Blindnietdorn wieder heruntergezogen werden. Dies erfolgt nur dann, wenn die Blindniethülse in eine entsprechende Bohrung wenigstens eines Werkstücks eingefügt werden soll. Vorzugsweise sind die Position der Sollbruchstelle und damit die Position der radialen Ausdehnung im Bereich der Sollbruchstelle an dem Blindnietdorn sowie die Länge der Blindniethülse derart aufeinander abgestimmt, dass nach dem Aufschieben der Blindniethülse über die Sollbruchstelle diese sich kaum zwischen der Sollbruchstelle und den Kopf des Blindnietdorns hin und her bewegen kann. Das bedeutet, der Abstand zwischen der Sollbruchstelle und dem Kopf des Blindnietdorns ist vorzugsweise nur unwesentlich größer als die Länge der Blindniethülse, so dass die aufgeschobene Blindniethülse nur mit ganz wenig Spiel axial an dem Blindnietdorn gehalten ist.

Die radiale Ausdehnung des Schaftes des Blindnietdorns im Bereich der Sollbruchstelle ist geringfügig größer als radiale Ausdehnung der Bohrung der Blindniethülse. Gleichzeitig ist die radiale Ausdehnung der Bohrung der Blindniethülse geringfügig größer als die radiale Ausdehnung des Schaftes des Blindnietdorns außerhalb des Bereichs der Sollbruchstelle. Hierdurch ist es möglich die Blindniethülse leicht auf den Schaft des Blindnietdorns, insbesondere auf dem Schaft im Bereich zwischen dem Kopf des Blindnietdorns und der Sollbruchstelle aufzuschieben. Die einmal aufgeschobene Blindniethülse verklemmt somit an der radialen Ausdehnung im Bereich der Sollbruchstelle, sobald die Blindniethülse sich von dem Kopf der Blindniethülse axial entlang des Schaftes der Blindniethülse in Richtung des freien Endes des Schaftes bewegt.

Durch die Reduzierung der Spanbildung an dem Schaft des Blindnietdorns bzw. an der Innenseite der Blindniethülse verschmutzen die Setzwerkzeuge zum Setzen des Dornbruchblindniets deutlich weniger, so dass die Reinigungsintervalle der Setzwerkzeuge verlängert werden können. Ferner ist aufgrund der geringen Verschmutzung der Setzwerkzeuge der finanzielle Aufwand für die Beschaffung von Ersatzteilen für die Setzwerkzeuge gering.

Der Schaft des Blindnietdorns weist vorzugsweise ein kreiszylindrisches Vollprofil auf. Entsprechend weist die Blindniethülse zur Aufnahme des Schaftes des Blindnietdorns eine kreiszylindrische Bohrung durch den Hülsenkopf und den Hülsenschaft auf. Die radiale Ausdehnung des Schaftes im Bereich der Sollbruchstelle kann beispielsweise durch einen an der Außenmantelfläche des Schaftes angeordneten Vorsprung gebildet sein. Gemäß einer besonders bevorzugten Weiterentwicklung der Erfindung kann bei einem Dornbruchblindniet vorgesehen sein, dass der Schaft des Blindnietdorns im Bereich der Sollbruchstelle eine nach außen gewölbte Aufdickung aufweist. Die Aufdickung kann beispielsweise stoffschlüssig im Bereich der Sollbruchstelle an dem Schaft des Blindnietdorns angebracht sein. Dies kann beispielsweise durch eine Schweißverbindung oder durch eine Klebverbindung realisiert sein. Besonders bevorzugt ist die Aufdickung einstückig mit dem Schaft des Blindnietdorns ausgebildet. Insbesondere ist die Aufdickung bei der Erstellung der Sollbruchstelle erzeugt.

Die Aufdickung ist nach außen gewölbt. Das heißt, die Aufdickung ist radial nach außen gewölbt bezogen auf die Längsachse des Blindnietdorns. Hierdurch ist sichergestellt, dass die Innenwandlung der Blindniethülse nicht an einer scharfkantigen Stelle vorbeigeführt wird während des Aufschiebens der Blindniethülse auf den Schaft des Blindnietdorns.

Besonders bevorzugt weist die gewölbte Aufdickung eine längliche Erstreckung auf, die parallel zu der Längsachse des Schaftes des Blindnietdorns verläuft. Hierdurch ist sichergestellt, dass die Blindniethülse einerseits unter Aufbringung einer bestimmten Kraft leicht in Richtung des Kopfes des Blindnietdorns geschoben werden kann, andererseits an dem Schaft des Blindnietdorns im Bereich der Sollbruchstelle verklemmt, wenn diese sich in Richtung des freien Endes des Blindnietdorns bewegt.

Erfindungsgemäß sind wenigstens die dem Kopf des Blindnietdorns zugewandten Übergänge zwischen der Sollbruchstelle und dem Schaft fließend ausgebildet. Fließend ausgebildet bedeutet im Sinne der Erfindung, dass keine scharfen Kanten und Ecken im Bereich der Sollbruchstelle, insbesondere an den Übergängen zwischen der Sollbruchstelle und dem dem Kopf zugewandten Schaftteil vorhanden sind. Hierdurch gewährleistet, dass bereits beim Aufschieben der Blindniethülse auf den Schaft des Blindnietdorns keine Spanbildung entsteht, die sich beispielsweise im Bereich der Sollbruchstelle an dem Schaft des Blindnietdorns ablagern kann. Durch die fließenden Übergänge, die insbesondere abgerundet bzw. gewölbt ausgebildet sind, ist sichergestellt, dass die Blindniethülse bei Aufbringung einer bestimmten Kraft über die Sollbruchstelle in Richtung Kopf des Blindnietdorns ohne Spanbildung an dem Schaft des Blindnietdorns bzw. der Innenseite der Blindniethülse gleiten kann.

Gemäß einer bevorzugten Weiterbildung der Erfindung kann bei einem Dornbruchblindniet vorgesehen sein, dass am Schaft des Blindnietdorns im Bereich vor dessen Kopf Restdornverriegelungskerben vorgesehen sind. Vorzugsweise sind mehrere Restdornverriegelungskerben beanstandet zueinander an der Außenmantelfläche des Schaftes des Blindnietdorns angeordnet. Diese Restdornverriegelungskerben sind vorzugsweise derartig ausgebildet, dass zwischen zwei benachbarten Restdornverriegelungskerben umlaufende Rippen gebildet sind, deren radiale Ausdehnung bezogen auf die Längsachse des Schaftes des Blindnietdorns geringfügig größer ist als die radiale Ausdehnung des Schaftes vor dem Restdornverriegelungskerben. Hierdurch kann eine Verklemmung der Blindniethülse an den Restdornverriegelungskerben realisiert und dieser im Bereich der Restdornverriegelungskerben an dem Schaft des Blindnietdorns gehalten werden. Die Restdornverriegelungskerben bzw. die umlaufende Rippen weisen keine scharfen Kanten, sondern fließende Formen auf, so dass eine Spanbildung unterbunden bleibt.

Bei dem zuvor gemäß dem ersten Aspekt der Erfindung beschriebenen Dornbruchblindniet ist keine Haltekerbe zum zusätzlichen Fixieren der Blindniethülse an dem Blindnietdorn erforderlich. So kann eine Spanbildung beim Aufschieben der Blindniethülse auf den Schaft des Blindnietdorns bzw. bei einer Bewegung der Blindniethülse auf dem Schaft des Blindnietdorns reduziert bzw. gänzlich vermieden werden.

Gemäß einem zweiten Aspekt der Erfindung wird die Aufgabe gelöst durch einen Dornbruchblindniet, aufweisend einen Blindnietdorn und eine Blindniethülse, wobei der Blindnietdorn einen länglichen Schaft, einen Kopf an einem Ende des Schaftes, eine Sollbruchstelle sowie eine Haltekerbe aufweist, und wobei die Blindniethülse einen Hülsenschaft und einen Hülsenkopf, die zur Aufnahme des Blindnietdorns ausgebildet sind, aufweist. Im Unterschied zu einem Dornbruchblindniet gemäß dem ersten Aspekt der Erfindung, weist der Dornbruchblindniet gemäß dem zweiten Aspekt zusätzlich eine Haltekerbe auf. Der Dornbruchblindniet gemäß dem zweiten Aspekt der Erfindung weist zusätzlich auf, dass der Schaft des Blindnietdorns im Bereich der Haltekerbe eine radiale Ausdehnung aufweist, die größer ist als die radiale Ausdehnung des länglichen Schaftes außerhalb des Bereichs der Haltekerbe und die zur Ausbildung einer Verklemmung der Blindniethülse am Schaft im Bereich der Haltekerbe bei koaxialer Ausrichtung der Blindniethülse zu dem Schaft des Blindnietdorns größer ist als die radiale Ausdehnung der Bohrung der Blindniethülse. Ferner ist der Dornbruchblindniet dadurch gekennzeichnet, dass wenigstens die der Sollbruchstelle des Blindnietdorns zugewandten Übergänge zwischen Haltekerbe und dem Schaft fließend ausgebildet sind. Durch die fließend ausgebildeten Übergänge wird verhindert, dass beim Aufschieben der Blindniethülse auf den Schaft des Blindnietdorns in Richtung des Kopfes des Blindnietdorns Späne an der Innenseite der Blindniethülse abgeschabt werden. Durch die spezielle Ausgestaltung der Haltekerbe bzw. der Übergänge von der Haltekerbe zu der Mantelfläche des Schaftes des Blindnietdorns ist sichergestellt, dass unter Aufbringung einer bestimmten Kraft die Blindniethülse auf den Teil des Schaftes des Blindnietdorns aufgeschoben werden kann, der zwischen der Haltekerbe und dem Kopf des Blindnietdorns ausgebildet ist. Die radiale Ausdehnung im Bereich der Haltekerbe verhindert, dass die aufgeschobene Blindniethülse vom Schaft des Blindnietdorns herunterrutscht.

Auch ein derartig ausgebildeter Dornbruchblindniet reduziert die Spanbildung beim Aufschieben der Blindniethülse auf den Schaft des Blindnietdorns. Durch die verringerte Spanbildung zwischen der Blindniethülse und dem Schaft des Blindnietdorns, können die Reinigungsintervalle der Nietwerkzeuge, die zum Setzen der Dornbruchblindniete verwendet werden, verlängert werden. Ferner wird durch derartige Dornbruchblindniete der finanzielle Aufwand für die Beschaffung von Ersatzteilen für die Nietwerkzeuge, beispielsweise für Nietpistolen, zurückgehen.

Besonders bevorzugt ist ein Dornbruchblindniet, bei dem der Schaft des Blindnietdorns im Bereich der Haltekerbe eine nach außen gewölbte Aufdickung aufweist. Die Aufdickung kann beispielsweise stoffschlüssig im Bereich der Haltekerbe an dem Schaft des Blindnietdorns angebracht sein. Dies kann beispielsweise durch eine Schweißverbindung oder durch eine Klebverbindung realisiert sein. Besonders bevorzugt ist die Aufdickung einschlägig mit dem Schaft des Blindnietdorns ausgebildet. Insbesondere ist die Aufdickung bei der Erstellung der Haltekerbe erzeugt. Durch die nach außen gewölbte Aufdickung ist gewährleistet, dass die Innenmantelfläche der Blindniethülse nicht an einer scharfkantigen Stelle im Bereich der Haltekerbe vorbeigeführt wird während des Aufschiebens der Blindniethülse auf den Schaft des Blindnietdorns. Bevorzugt weist die gewölbte Aufdickung eine längliche Erstreckung auf, die parallel zu der Längsachse des Schaftes des Blindnietdorns verläuft. Hierdurch ist zum einen sichergestellt, dass die Blindniethülse unter Aufbringung einer bestimmten Kraft leicht in Richtung des Kopfes des Blindnietdorns auf den Schaft des Blindnietdorns aufgeschoben werden kann. Zum anderen ist gewährleistet, dass die einmal aufgeschobene Blindniethülse im Bereich der Haltekerbe an dem Schaft des Blindnietdorns verklemmt, damit diese nicht vom Schaft des Blindnietdorns herunterrutschen kann.

Gemäß einer bevorzugten Weiterbildung der Erfindung kann bei einem Dornbruchblindniet vorgesehen sein, dass wenigstens die dem Kopf des Blindnietdorns zugewandten Übergänge zwischen der Haltekerbe und dem Schaft des Blindnietdorns fließend ausgebildet sind. Ganz besonders bevorzugt sind auch die Übergänge zwischen der Haltekerbe und dem freien Ende des Schaftes des Blindnietdorns fließend ausgebildet. Zusätzlich ist vorteilhaft, wenn wenigstens auch die dem Kopf des Blindnietdorns zugewandten Übergänge in der Sollbruchstelle und dem Schaft fließend ausgebildet sind. Vorzugsweise sind alle Übergänge zwischen der Sollbruchstelle und dem Schaft fließend ausgebildet. Die Übergänge sind vorzugsweise abgerundet, insbesondere gewölbt, ausgebildet. Bei einer derartigen Ausgestaltung eines Dornbruchblindniets existieren kaum bzw. keine scharfen Kanten oder Ecken, durch die beim Aufschieben der Blindniethülse auf den Schaft des Blindnietdorns Späne entstehen können. Entsprechend findet keine bzw. kaum eine Verschmutzung der Nietwerkzeuge beim Setzen derartiger Dornbruchblindniete statt, was die Reinigungsintensität der Nietwerkzeuge verringert und deren Lebensdauer erhöht.

Ferner ist ein Dornbruchblindniet bevorzugt, bei dem im Bereich der Übergänge Abschrägungen vorgesehen sind, die geneigt zu der Längsachse des Dornbruchblindniets, insbesondere in einem Winkel zwischen 5° und 40° geneigt zu der Längsachse des Dornbruchblindniets verlaufen. Ein derart ausgebildeter Dornbruchblindniet weist weiche Konturausläufe der Haltekerbe und gegebenenfalls zusätzlich der Sollbruchstelle auf, so dass eine Spanbildung beim Aufschieben der Blindniethülse auf den Schaftes Blindnietdorns bzw. beim Halten der Blindniethülse an den Schaft des Blindnietdorns nicht erfolgt. Über den weicheren Auslauf der Haltekerbe und gegebenenfalls der Sollbruchstelle wird eine verringerte Spanbildung realisiert bzw. gänzlich unterbunden.

Die vorliegende Erfindung wird näher erläutert anhand der beigefügten Zeichnungsfiguren. Es zeigen jeweils schematisch:
- Figur 1: eine Schnittdarstellung durch einen Blindnietdorn eines Dornbruchblindniets gemäß dem Stand der Technik,
- Figur 2: eine perspektivische Darstellung einer Blindniethülse gemäß dem Stand der Technik,
- Figur 3: in einer perspektivischen Ansicht den an einer Sollbruchstelle abgerissenen Teil des Schaftes eines Blindnietdorns gemäß dem Stand der Technik,
- Figur 4: in einer Schnittdarstellung einen bekannten Dornbruchblindniet während des Setzvorganges durch zwei Werkstücke,
- Figur 5: in einer Schnittdarstellung den Dornbruchblindniet gemäß Figur 4 nach Abschluss des Setzvorganges durch die die zwei Werkstücke,
- Figur 6: eine Seitenansicht einen Blindnietdorn eines Dornbruchblindniets gemäß dem ersten Aspekt der Erfindung,
- Figur 7: einen Schnitt durch die Sollbruchstelle in dem Blindnietdorn des Dornbruchblindniets gemäß Figur 6,
- Figur 8: eine im Vergleich zu Figur 6 um 90° gedrehte Seitenansicht auf den Dornbruchblindniet,
- Figur 9: einen Schnitt durch den Schaft des Blindnietdorns des Dornbruchblindniets gemäß Figur 8 außerhalb der Sollbruchstelle,
- Figur 10: eine Seitenansicht eines Dornbruchblindniets gemäß den zweiten Aspekt der Erfindung,
- Figur 11: einen Schnitt durch die Haltekerbe des Dornbruchblindniets gemäß Figur 10,
- Figur 12: eine Draufsicht auf eine Blindniethülse, die zur Aufnahme eines Blindnietdorns eines Dornbruchblindniets ausgebildet ist,
- Figur 13: eine vergrößerte Darstellung des Bereichs der Haltekerbe bei einem Dornbruchblindniet gemäß dem Stand der Technik,
- Figur 14: eine vergrößerte Darstellung des Bereichs der Haltekerbe bei einem Dornbruchblindniet gemäß der Erfindung,
- Figur 15: eine vergrößerte Darstellung des Bereichs der Haltekerbe bei einem zweiten Dornbruchblindniet gemäß der Erfindung, und
- Figur 16: eine vergrößerte Darstellung des Bereichs der Haltekerbe bei einem dritten Dornbruchblindniet gemäß der Erfindung.

Elemente mit gleicher Funktion und Wirkungsweise sind in den Fig. 1 bis 16 mit denselben Bezugszeichen versehen.

Wie bereits in der Beschreibungseinleitung ausgeführt, ist in den Fig. 1 bis 5 ein aus dem Stand der Technik bekannter Dornbruchblindniet 1 bzw. ein Setzvorgang eines derartigen Dornbruchblindniets 1 durch zwei Werkstücke 50, 51 dargestellt.

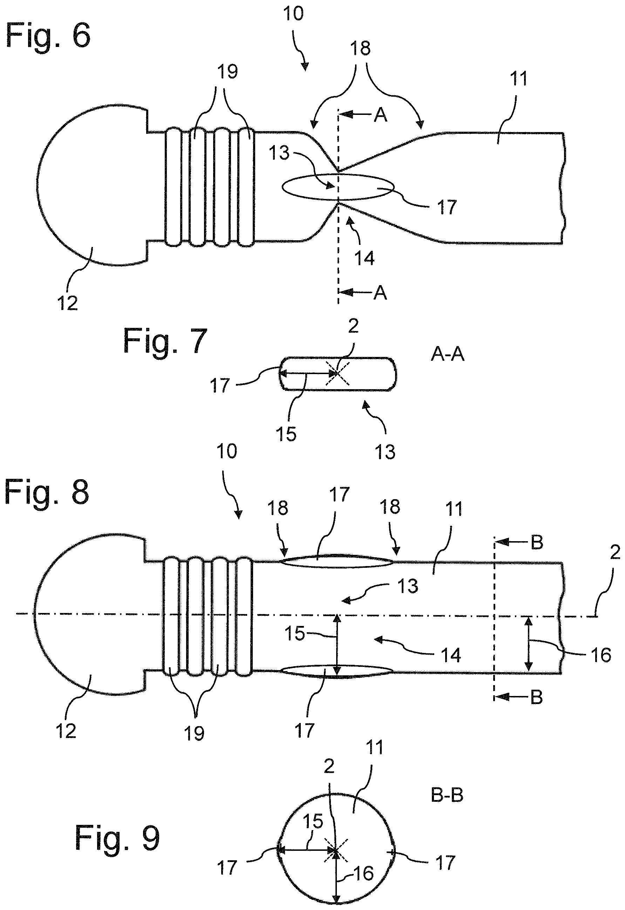

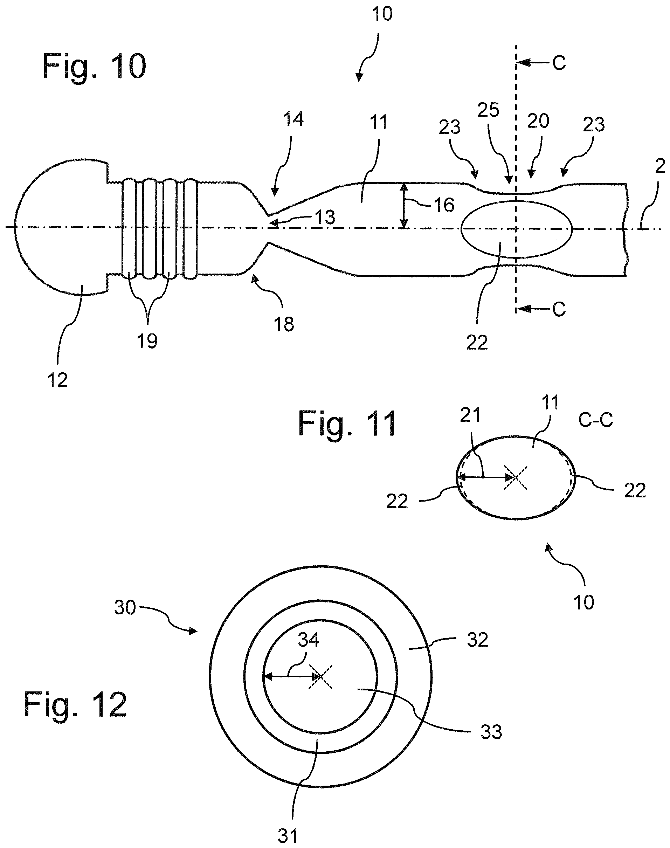

Fig. 6 seit schematisch in einer Seitenansicht einen Schaft 11 eines Blindnietdorns 10 eines Dornbruchblindniets 1 gemäß dem ersten Aspekt der Erfindung. Der Blindnietdorn 10 weist einen länglichen Schaft 11 sowie einen Kopf 12 an einem Ende des Schaftes 11 auf. Ferner weist der Blindnietdorn 10 eine Sollbruchstelle 13 auf, an der der Schaft 11 zum Schluss des Setzvorgangs des Dornbruchblindniets 1 abreißt. Der Schaft 11 weist im Bereich 14 der Sollbruchstelle 13 eine radiale Ausdehnung 15 auf. Diese radiale Ausdehnung 15 ist größer als die radiale Ausdehnung 16 des länglichen Schaftes 11 außerhalb des Bereichs 14 der Sollbruchstelle 13. In Fig. 8 ist derselbe Blindnietdorn 10 um 90° gedreht dargestellt. Die radiale Ausdehnung 15 des Schaftes 11 im Bereich 14 der Sollbruchstelle 13 wird durch die nach außen gewölbte Aufdickung 17 ausgebildet. Das heißt, der Schaft 11 weist im Bereich 14 der Sollbruchstelle 13 auf zwei sich gegenüberliegenden Seiten jeweils eine nach außen gewölbte Aufdickung 17 auf. Die radiale Ausdehnung 15 des Schaftes 11 im Bereich 14 der Sollbruchstelle 13 ist größer als die radiale Ausdehnung der Bohrung 33 einer Blindniethülse 30 des Dornbruchblindniets 1. Eine derartige Blindniethülse 30 ist beispielsweise in Fig. 12 dargestellt. Die radiale Ausdehnung 15 im Bereich 14 der Sollbruchstelle 13, das heißt die nach außen gewölbten Aufdickungen 17 dienen zur Ausbildung einer Verklemmung der Blindniethülse 30 am Schaft 11 im Bereich 14 der Sollbruchstelle 13, nachdem die Blindniethülse 30 über die Sollbruchstelle 13 in Richtung des Kopfes 12 des Blindnietdorns 10 auf den Schaft 11 aufgeschoben worden ist. Hierdurch hält die radiale Ausdehnung 15 bzw. halten die nach außen gewölbten Aufdickungen 17 die einmal aufgeschobene Blindniethülse 30 sicher an dem Schaft 13 des Blindnietdorns 10. Zum Durchführen eines Setzvorgangs des Dornbruchblindniets 1 kann die Blindniethülse 30 unter Aufbringung einer bestimmten Kraft ausgehend von der Seite des Kopfes 12 des Blindnietdorns 10 in Richtung des freien Endes des Blindnietdorns 10 über die Sollbruchstelle 13 und damit über die Aufdickungen 17 geschoben werden, um von dem Blindnietdorn 10 getrennt zu werden.

Der in den Fig. 6 und 8 dargestellte Blindnietdorn 10 weist ferner fließend ausgebildete Übergänge 18 zwischen der Sollbruchstelle 13 und dem Schaft 11 auf. Diese gewährleisten, dass keine scharfen Kanten oder Ecken im Bereich der Sollbruchstelle 13 an dem Schaft 11 vorhanden sind, so dass weder beim Aufschieben der Blindniethülse 30 auf den Schaft 11, während des Haltens der Blindniethülse 30 an dem Schaft 11, noch beim Abziehen der Blindniethülse 30 von dem Schaft 11 Späne durch Abschabungen an der Mantelfläche der Bohrung der Blindniethülse 30 bzw. an der Außenmantelfläche des Schaftes 11 erzeugt werden, durch die bei einem nachfolgenden Setzvorgang des Dornbruchblindniets 1 die Setzwerkzeuge, beispielsweise Nietpistolen, verdecken. Durch das Verringern bzw. Vermeiden von Spanbildung während die Blindniethülse 30 an dem Schaft 11 axial beweglich gehalten ist, können die Reinigungsintervalle der Setzwerkzeuge deutlich verlängert werden. Ferner werden weniger Ersatzteile für die Setzwerkzeuge benötigt, was die Kosten für das Durchführen von Setzvorgängen gering hält.

Die fließend ausgebildeten Übergänge 18 weisen weiche Übergänge zwischen der Sollbruchstelle 13 und dem Schaft 11 des Blindnietdorns 10 auf. Die nach außen gewölbten Aufdickungen 17 weisen im Bereich 14 der Sollbruchstelle 13 eine längliche Erstreckung parallel zur Längsachse 2 des Blindnietdorns 10 auf. Hierdurch ist gewährleistet, dass eine aufgeschobene Blindniethülse 30 im Bereich des Schaftes 11 zwischen dem Kopf 12 und der Sollbruchstelle 13 gehalten werden kann. In diesem Bereich des Schaftes 11 sind zusätzlich Restdornverriegelungskerben bzw. -rippen 19 an dem Schaft 11 angeordnet. Diese verlaufen senkrecht zu der Längsachse 2 des Schaftes 11 des Blindnietdorns 10. Insbesondere sind die Restdornverriegelungskerben bzw. -rippen 19 umlaufend an dem Schaft 11 angeordnet. Diese dienen zur zusätzlichen Fixierung der aufgeschobenen Blindniethülse 30 an dem Blindnietdorn 10. Der Durchmesser der Restdornverriegelungskerben bzw. -rippen 19 ist geringfügig größer als der Durchmesser der Bohrung der Blindniethülse 30.

In Fig. 7 ist schematisch ein Schnitt durch die Sollbruchstelle 13 des Blindnietdorns 10 gemäß Fig. 6 dargestellt. Die radiale Ausdehnung 15 ist die Ausdehnung des Schaftes 11 ausgehend von der Längsachse 2 zur Außenmantelfläche der Aufdickung 17 im Bereich 14 der Sollbruchstelle 13 des Blindnietdorns 10.

In Fig. 9 ist ein Schnitt B-B durch den Schaft 11 des Blindnietdorns 10 eines Dornbruchblindniets 1 gemäß Fig. 8 außerhalb der Sollbruchstelle 13 gezeigt. Die radiale Ausdehnung 15 im Bereich 14 der Sollbruchstelle 13 ist geringfügig größer als die radiale Ausdehnung 16 des länglichen Schaftes 11 außerhalb des Bereichs 14 der Sollbruchstelle 13.

Fig. 10 zeigt schematisch in einer Seitenansicht einen Blindnietdorn 10 eines Dornbruchblindniets 1 gemäß den zweiten Aspekt der Erfindung. Bei dem Blindnietdorn 10 eines derartigen Dornbruchblindniets 1 ist zusätzlich eine Haltekerbe 20 an dem Schaft 11 vorgesehen. Im Bereich 25 der Haltekerbe 20 weist der Schaft 11 eine radiale Ausdehnung 21 auf, die größer ist als die radiale Ausdehnung 16 des länglichen Schaftes 11 außerhalb des Bereichs 25 der Haltekerbe 20, siehe auch Fig. 11. Die größere radiale Ausdehnung 21 wird durch die im Bereich 25 der Haltekerbe 20 nach außen gewölbte Aufdickung 22 erreicht. Die radiale Ausdehnung 21 ist größer als die radiale Ausdehnung 34 der Bohrung 33 der Blindniethülse 30, siehe Fig. 12, so dass es beim Aufschieben bzw. Abziehen der Blindniethülse 30 über die Haltekerbe 20 zu einer Verklemmung der Blindniethülse 30 am Schaft 11 im Bereich 25 der Haltekerbe 20 kommt. Hierdurch wird ein unbeabsichtigtes Abziehen bzw. Herunterrutschen der Blindniethülse 30 von dem Schaft 11 des Blindnietdorns 10 unterbunden. Die Übergänge 23 zwischen der Haltekerbe 20 und dem Schaft 11 sind fließend ausgebildet, so dass es weder beim Aufstecken, noch beim Halten oder beim Abziehen der Blindniethülse 30 vom Schaft 11 des Blindnietdorns 10 zu einer Spanbildung an der Innenmantelfläche der Bohrung der Blindniethülse 30 oder an der Außenmantelfläche des Schaftes 11 des Blindnietdorns 10 kommt. Die Haltekerbe 20 weist fließend ausgebildete Übergänge 23 zu dem Schaft 11 auf. Das heißt, im Bereich zwischen der Haltekerbe 20 und dem Schaft 11 sind weiche, insbesondere abgerundete oder gewölbte Übergänge 23 vorhanden, so dass die Blindniethülse 30 unter Aufbringung einer bestimmten Kraft über die Haltekerbe 20 geschoben werden kann. Der Blindnietdorn 11 weist ferner fließend ausgebildete Übergänge 18 zwischen der Sollbruchstelle 13 und dem Schaft 11 auf. Hierdurch sind am gesamten Schaft 11 des Blindnietdorns 10 keine scharfen Kanten oder Ecken ausgebildet, die zu einer Spanbildung an der Innenmantelfläche der Bohrung der Blindniethülse 30 führen können.

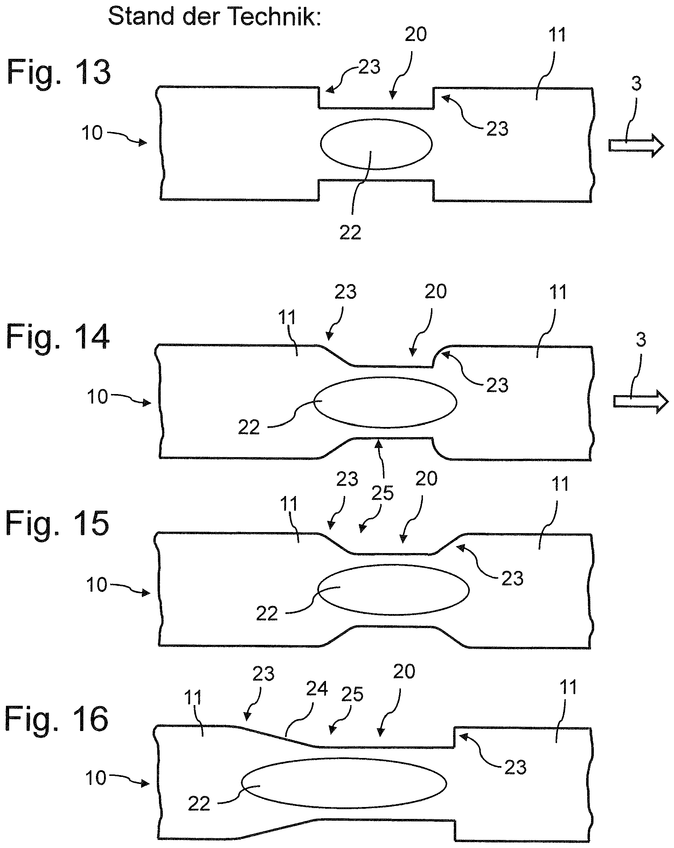

In Fig. 13 ist schematisch eine vergrößerte Darstellung des Bereichs der Haltekerbe 20 bei einem Dornbruchblindniet 1 gemäß dem Stand der Technik dargestellt. Im Bereich der Übergänge 23 zwischen der Haltekerbe 20 und dem angrenzenden Schaft 11 sind Kanten bzw. Ecken vorgesehen, die beim Aufschieben, Halten bzw. Abziehen der Blindniethülse 30 am bzw. über dem Schaft 11 des Blindnietdorns 10 zu einer Spanbildung an eine Blindniethülse führen und dadurch ein Verschmutzen der Setzwerkzeuge fördern.

In den Fig. 14 bis 16 sind schematisch jeweils vergrößerte Darstellungen des Bereichs 25 der Haltekerbe 20 bei einem Dornbruchblindniet 1 gemäß der Erfindung dargestellt. Besonders bevorzugt sind Blindnietdorne 10, die gemäß den Fig. 14 und 15 ausgebildet sind, da diese an beiden Seiten der Haltekerbe 20 fließend ausgebildete Übergänge 23 zu dem Schaft 11 des Blindnietdorns 10 aufweisen. Mit Bezugszeichen 3 ist die Einführrichtung des Blindnietdorns 10 in die Bohrung einer Blindniethülse 30 dargestellt.

### Bezugszeichenliste

- 1: Dornbruchblindniet
- 2: Längsachse
- 3: Einführrichtung Blindnietdorn

- 10: Blindnietdorn
- 11: länglicher Schaft
- 12: Kopf
- 13: Sollbruchstelle
- 14: Bereich der Sollbruchstelle
- 15: radiale Ausdehnung im Bereich der Sollbruchstelle
- 16: radiale Ausdehnung außerhalb des Bereichs der Sollbruchstelle
- 17: gewölbte Aufdickung
- 18: Übergänge
- 19: Restdornverriegelungskerben
- 20: Haltekerbe
- 21: radiale Ausdehnung im Bereich der Haltekerbe
- 22: gewölbte Aufdickung
- 23: Übergänge
- 24: Abschrägung
- 25: Bereich der Haltekerbe

- 30: Blindniethülse
- 31: Hülsenschaft
- 32: Hülsenkopf
- 33: Bohrung
- 34: radiale Ausdehnung
- 35: Riffelungen
- 36: Fasern
- 37: Schließkopf

- 40: Spannablagerungen
- 50: Werkstück
- 51: Werkstück
- 52: Zwischenschicht

## Patentansprüche

1. Dornbruchblindniet (1), aufweisend einen Blindnietdorn (10) und eine Blindniethülse (30), wobei der Blindnietdorn (10) einen länglichen Schaft (11), einen Kopf (12) an einem Ende des Schaftes (11) sowie eine Sollbruchstelle (13) aufweist, und wobei die Blindniethülse (30) einen Hülsenschaft (31) und einen Hülsenkopf (32), die zur Aufnahme des Blindnietdorns (10) ausgebildet sind, aufweist, wobei der Schaft (11) des Blindnietdorns (10) im Bereich (14) der Sollbruchstelle (13) eine radiale Ausdehnung (15) aufweist, die größer ist als die radiale Ausdehnung (16) des länglichen Schaftes (11) außerhalb des Bereichs (14) der Sollbruchstelle (13) und die zur Ausbildung einer Verklemmung der Blindniethülse (30) am Schaft (11) im Bereich (14) der Sollbruchstelle (13) bei koaxialer Ausrichtung der Blindniethülse (30) zu dem Schaft (11) des Blindnietdorns (10) größer ist als die radiale Ausdehnung (34) der Bohrung (33) der Blindniethülse (30) **dadurch gekennzeichnet, dass** wenigstens die dem Kopf (12) des Blindnietdorns (10) zugewandten Übergänge (18) zwischen der Sollbruchstelle (13) und dem Schaft (11) fließend ausgebildet sind.

2. Dornbruchblindniet (1) nach Anspruch 1, **dadurch gekennzeichnet, dass** der Schaft (11) des Blindnietdorns (10) im Bereich (14) der Sollbruchstelle (13) eine nach außen gewölbte Aufdickung (17) aufweist.

3. Dornbruchblindniet (1) nach einem der vorangegangenen Ansprüche, **dadurch gekennzeichnet, dass** die Übergänge (18) abgerundet, insbesondere gewölbt, ausgebildet sind.

4. Dornbruchblindniet (1) nach einem der vorangegangenen Ansprüche, **dadurch gekennzeichnet, dass** am Schaft (11) im Bereich vor dem Kopf (12) Restdornverriegelungskerben (19) vorgesehen sind.

5. Dornbruchblindniet (1), aufweisend einen Blindnietdorn (10) und eine Blindniethülse (30), wobei der Blindnietdorn (10) einen länglichen Schaft (11), einen Kopf (12) an einem Ende des Schaftes (11), eine Sollbruchstelle (13) sowie eine Haltekerbe (20) aufweist, und wobei die Blindniethülse (30) einen Hülsenschaft (31) und einen Hülsenkopf (32), die zur Aufnahme des Blindnietdorns (10) ausgebildet sind, aufweist, wobei der Schaft (11) des Blindnietdorns (10) im Bereich (25) der Haltekerbe (20) eine radiale Ausdehnung (21) aufweist, die größer ist als die radiale Ausdehnung (16) des länglichen Schaftes (11) außerhalb des Bereichs (25) der Haltekerbe (20) und die zur Ausbildung einer Verklemmung der Blindniethülse (20) am Schaft (11) im Bereich (25) der Haltekerbe (20) bei koaxialer Ausrichtung der Blindniethülse (30) zu dem Schaft (11) des Blindnietdorns (10) größer ist als die radiale Ausdehnung (34) der Bohrung (33) der Blindniethülse (30), **dadurch gekennzeichnet, dass** wenigstens die der Sollbruchstelle (13) des Blindnietdorns (10) zugewandten Übergänge (23) zwischen Haltekerbe (20) und dem Schaft (11) fließend ausgebildet sind.

6. Dornbruchblindniet (1) nach Anspruch 5, **dadurch gekennzeichnet, dass** der Schaft (11) des Blindnietdorns (10) im Bereich (25) der Haltekerbe (20) eine nach außen gewölbte Aufdickung (22) aufweist.

7. Dornbruchblindniet (1) nach Anspruch 5 oder 6, **dadurch gekennzeichnet, dass** wenigstens die dem Kopf (12) des Blindnietdorns (10) zugewandten Übergänge (23) zwischen der Haltekerbe (20) und dem Schaft (11) fließend ausgebildet sind.

8. Dornbruchblindniet (1) nach einem der vorangegangenen Ansprüche 5 bis 7, **dadurch gekennzeichnet, dass** wenigstens die dem Kopf (12) des Blindnietdorns (10) zugewandten Übergänge (18) zwischen der Sollbruchstelle (13) und dem Schaft (11) fließend ausgebildet sind.

9. Dornbruchblindniet (1) nach einem der vorangegangenen Ansprüche 5 bis 8, **dadurch gekennzeichnet, dass** die Übergänge (23) abgerundet, insbesondere gewölbt, ausgebildet sind.

10. Dornbruchblindniet (1) nach einem der vorangegangenen Ansprüche 5 bis 9, **dadurch gekennzeichnet, dass** im Bereich der Übergänge (18, 23) Abschrägungen (24) vorgesehen sind, die geneigt zu der Längsachse (2) des Dornbruchblindniets (1) verlaufen, insbesondere in einem Winkel zwischen 5° und 40° geneigt zur Längsachse (2) des Dornbruchblindniets (1) verlaufen.

## Claims

1. A break-stem blind rivet (1), having a blind rivet mandrel (10) and a blind rivet sleeve (30), wherein the blind rivet mandrel (10) has an elongate shank (11), a head (12) at one end of the shank (11) and also a predetermined breaking point (13), and wherein the blind rivet sleeve (30) has a sleeve shank (31) and a sleeve head (32) which are designed to receive the blind rivet mandrel (10), wherein the shank (11) of the blind rivet mandrel (10) in the region (14) of the predetermined breaking point (13) has a radial extent (15) which is greater than the radial extent (16) of the elongate shank (11) outside the region (14) of the predetermined breaking point (13) and which for forming clamping of the blind rivet sleeve (30) on the shank (11) in the region (14) of the predetermined breaking point (13) when the blind rivet sleeve (30) is oriented coaxially to the shank (11) of the blind rivet mandrel (10) is greater than the radial extent (34) of the bore (33) of the blind rivet sleeve (30), **characterised in that** at least the transitions (18) between the predetermined breaking point (13) and the shank (11) which face the head (12) of the blind rivet mandrel (10) are designed in flowing manner.

2. A break-stem blind rivet (1) according to Claim 1, **characterised in that** the shank (11) of the blind rivet mandrel (10) has an outward-bulging thickened portion (17) in the region (14) of the predetermined breaking point (13).

3. A break-stem blind rivet (1) according to one of the preceding claims, **characterised in that** the transitions (18) are formed rounded off, especially bulging.

4. A break-stem blind rivet (1) according to one of the preceding claims, **characterised in that** residual shank locking notches (19) are provided on the shank (11) in the region before the head (12).

5. A break-stem blind rivet (1), having a blind rivet mandrel (10) and a blind rivet sleeve (30), wherein the blind rivet mandrel (10) has an elongate shank (11), a head (12) at one end of the shank (11), a predetermined breaking point (13) and also a holding notch (20), and wherein the blind rivet sleeve (30) has a sleeve shank (31) and a sleeve head (32) which are designed to receive the blind rivet mandrel (10), wherein the shank (11) of the blind rivet mandrel (10) in the region (25) of the holding notch (20) has a radial extent (21) which is greater than the radial extent (16) of the elongate shank (11) outside the region (25) of the holding notch (20) and which for forming clamping of the blind rivet sleeve (20) on the shank (11) in the region (25) of the holding notch (20) when the blind rivet sleeve (30) is oriented coaxially to the shank (11) of the blind rivet mandrel (10) is greater than the radial extent (34) of the bore (33) of the blind rivet sleeve (30), **characterised in that** at least the transitions (23) between the holding notch (20) and the shank (11) which face the predetermined breaking point (13) of the blind rivet mandrel (10) are designed in flowing manner.

6. A break-stem blind rivet (1) according to Claim 5, **characterised in that** the shank (11) of the blind rivet mandrel (10) has an outward-bulging thickened portion (22) in the region (25) of the holding notch (20).

7. A break-stem blind rivet (1) according to Claim 5 or Claim 6, **characterised in that** at least the transitions (23) between the holding notch (20) and the shank (11) which face the head (12) of the blind rivet mandrel (10) are designed in flowing manner.

8. A break-stem blind rivet (1) according to one of the preceding Claims 5 to 7, **characterised in that** at least the transitions (18) between the predetermined breaking point (13) and the shank (11) which face the head (12) of the blind rivet mandrel (10) are designed in flowing manner.

9. A break-stem blind rivet (1) according to one of the preceding Claims 5 to 8, **characterised in that** the transitions (23) are formed rounded off, especially bulging.

10. A break-stem blind rivet (1) according to one of the preceding Claims 5 to 9, **characterised in that** in the region of the transitions (18, 23) there are provided chamfers (24) which run inclined relative to the longitudinal axis (2) of the break-stem blind rivet (1), especially run inclined at an angle of between 5° and 40° relative to the longitudinal axis (2) of the break-stem blind rivet (1).

## Revendications

1. Rivet aveugle (1) comportant un clou (10) et une douille (30),
- le clou (10) ayant une tige allongée (11), une tête (12) à une extrémité la tige (11) ainsi qu'une zone de rupture de consigne (13), et
- la douille (30) ayant un corps (31) et une tête pour recevoir le clou (10),
- la tige (11) du clou (10) ayant dans la région (14) de zone de rupture de consigne (13), une extension radiale (15) supérieure à l'extension radiale (16) de la tige allongée (11) au-delà de la région (14) de la zone de rupture de consigne (13) et qui, pour réaliser le serrage de la douille (30) sur la tige (11) dans la région (14) de la zone de rupture de consigne (13) pour aligner coaxialement le corps (30) sur la tige (11) du clou (10), supérieur à l'extension radiale (34) du perçage (33) de la douille (30),
rivet **caractérisé en ce qu'**
au moins les transitions (18) tournées vers la tête (12) du clou (10) entre la zone de rupture de consigne (13) et la tige (11) sont réalisées de façon à être continues.

2. Rivet aveugle (1) selon la revendication 1,
**caractérisé en ce que**
dans la région (14) de la zone de rupture de consigne (13) la tige (11) du clou (10) a une surépaisseur (17) bombée vers l'extérieur.

3. Rivet aveugle (1) selon l'une des revendications précédentes,
**caractérisé en ce que**
les transitions (18) sont arrondies notamment bombées.

4. Rivet aveugle (1) selon l'une des revendications précédentes,
**caractérisé en ce que**
dans la région en amont de la tête (12), la tige (11) comporte des encoches de verrouillage de retenue de clou (19).

5. Rivet aveugle (1),
comportant un clou (10) et une douille (30), le clou (10) ayant un corps allongé (11) une tête (12) à une extrémité de la tige (11), une zone de rupture de consigne (13) ainsi qu'une encoche de retenue (20), et
le rivet aveugle (30) a un corps de douille (31) et une tête de douille (32) pour recevoir le clou (10),
la tige (11) du clou (10) ayant dans la région (25) de l'encoche de retenue (20), un extension radiale (21) supérieure à l'extension radiale (16) de la tige allongée (11) au-delà de la zone (25) de l'encoche de retenue (20) et qui, pour le serrage de la douille (20) sur la tige (11) dans la région (25) de l'encoche de retenue (20), pour l'alignement coaxial du manchon de rivet aveugle (30) vers la tige (11) du clou (10), est supérieure à l'extension radiale (34) du perçage (33) du manchon de rivet aveugle (30), **caractérisé en ce qu'**
au moins les transitions (23) tournées vers la zone de rupture de consigne (13) du clou (10), sont réalisées de façon continue entre les encoches de retenue (20) et la tige (11).

6. Rivet aveugle (1) selon la revendication 5,
**caractérisé en ce que**
la tige (11) du clou (10) comporte une surépaisseur (22) bombée vers l'extérieur dans la région (25) de l'encoche de retenue (20).

7. Rivet aveugle (1) selon la revendication 5 ou 6,
**caractérisé en ce qu'**
au moins les transitions (23) tournées vers la tête (12) du clou (10) entre l'encoche de retenue (20) et la tige (11) sont réalisées de façon continue.

8. Rivet aveugle (1) selon l'une des revendications 5 à 7,
**caractérisé en ce qu'**
au moins les transitions (18) tournées vers la tête (12) du clou (10) entre la zone de rupture de consigne (13) et la tige (11) sont réalisées de façon continue.

9. Rivet aveugle (1) selon l'une des revendications précédentes 5 à 8,
**caractérisé en ce que**
les transitions (23) sont arrondies, en particulier elles sont bombées.

10. Rivet aveugle (1) selon les revendications précédentes 5 à 9,
**caractérisé en ce que**
dans la région les transitions (18, 23) il y a des surfaces inclinées (24) qui sont inclinées par rapport à l'axe longitudinal (2) du rivet aveugle (1) notamment selon l'angle compris entre 5° et 40° par rapport à l'axe longitudinal (2) du rivet aveugle (1).
